# EUROPEAN PATENT SPECIFICATION

(11) **EP 3 002 176 B1**
(45) Date of publication and mention of the grant of the patent: **11.04.2018**
(21) Application number: 14464010.9
(22) Date of filing: 30.09.2014
(51) Int. Cl.: B62D 1/04, B62D 1/06

(54) **Detection Circuit, Detection Arrangement and Steering Wheel Arrangement**
Detektionsschaltung, Detektionsanordnung und Lenkradanordnung
Circuit de détection, dispositif de détection et ensemble de volant de direction

(43) Date of publication of application: 06.04.2016
(73) Proprietor: Continental Automotive GmbH, 30165 Hannover (DE)
(72) Inventor: Mihai, Luchian, 600071 St. Cornisa Bistritei (RO)

(56) References cited:
- EP-A1- 2 572 929
- DE-A1-102007 024 141
- DE-B3-102006 031 207
- US-A1- 2013 060 120

## Description

The invention relates to a detection circuit for detecting whether a steering wheel is in a hands-on state or a hands-off state. The invention further relates to a detection arrangement comprising such a detection circuit and to a steering wheel arrangement comprising such a detection arrangement.

Modern cars may comprise driving assistance systems that are able to perform steering tasks partially or totally automatically. For example, a car can be adapted to autonomously move into a parking lot or to follow a line of a motorway. In many of these cases, it is important for vehicle circuitry to detect if a driver has at least one hand at a steering wheel, because it may be required that the driver can react promptly in case a situation occurs that cannot be handled automatically, or because a distortion of the driving path due to action by a driver's hand should be omitted.

There are already detection circuits known in the prior art that are configured to sense if at least one hand of the driver is in contact with the steering wheel, known as hands-on state, or if no hand of the driver is in contact with the steering wheel, known as hands-off state.

EP 2 572 929 A1 discloses a detecting circuit comprising the features of the preamble of claim 1, that may be used for detecting a driver's hand on the steering wheel utilizing a capacitive sensing system connected to a heating element and a common mode choke representing an inductive load.

It is an object of the present invention to provide for an alternative detection circuit being able to detect whether a steering wheel is in a hands-on state or in a hands-off state. It is a further object of the present invention to provide for a detection arrangement comprising such a detection circuit and to provide for a steering wheel arrangement comprising such a detection arrangement.

This is solved by a detection circuit according to claim 1, a detection arrangement according to claim 9 and a steering wheel arrangement according to claim 12. Preferred embodiments can, for example, be derived from the dependent claims. The content of the claims is made as a content of the disclosure by explicit reference.

The invention relates to a detection circuit for detecting whether a steering wheel is in a hands-on state or a hands-off state. A hands-on state is especially a state in which at least one hand of the driver contacts the steering wheel. The hands-on state can also be defined such that both hands of the driver contact the steering wheel. A hands-off state is especially a state in which no hand of the driver contacts the steering wheel.

The detection circuit is adapted to be connected to a coil arrangement, the coil arrangement comprising a number of coils to be distributed around the steering wheel. These coils are used for the determination of the state. It should however be noted that neither the steering wheel nor the coil arrangement is part of the detection circuit.

The detection circuit comprises an inductive sensing unit adapted to detect the state based on inductive sensing at the coil arrangement. The detection circuit further comprises, a capacitive sensing unit adapted to detect the state based on capacitive sensing at the coil arrangement.

With the inventive detection circuit, it is possible to detect the state using two separate measurement principles, namely inductive sensing and capacitive sensing, without a requirement of separate measurement electrodes. This significantly increases reliability of the detection, wherein only one coil arrangement is needed and can be used for both measurement principles. It is also possible to switch between the two measurement principles in order to save energy.

The detection circuit may be implemented as an electronic circuit, for example a microcontroller, a microprocessor, a field programmable gate array (FPGA) or a general purpose computer. Especially, it may contain processor means and storage means, wherein program code is stored in the storage means that causes the processor means to behave in a certain way. The sensing units may each be implemented as separate units, for example in a way as just described, the may be implemented in a single unit so that they cannot be physically distinguished, or they can be implemented in a unit performing other tasks like supervision of the units or other control functions.

According to an implementation, the detection circuit is adapted to sense the state using the capacitive sensing unit as long as a hands-off state is detected, and to sense the state using the inductive sensing unit if a hands-on state is detected. This implementation can be used to save energy, as capacitive sensing usually consumes less energy and can be used in order to detect if there is contact at all. Inductive sensing can be used to ensure that the detected hands-on state is maintained.

The detection circuit can be adapted to terminate capacitive sensing if a hands-on state is detected. The detection circuit can further be adapted to resume capacitive sensing if a hands-off state is detected. These implementations can even further save energy.

Typically, capacitive sensing consumes less energy than inductive sensing. It should be noted that the implementations just described that can be used to save energy in this case can be implemented inversely in case of a specific implementation in which capacitive sensing consumes more energy than inductive sensing.

According to an implementation, the detection circuit further comprises an electrocardiography unit being configured to measure an electrocardiogram using the coil arrangement. This can be used in order to detect medical conditions of a driver, especially conditions that can affect the driver's ability to securely control the car. In case such a medical condition is detected, a warning message can be issued requesting the driver to stop the car. The car can also be stopped automatically or medical assistance can automatically be requested, for example by wireless communication. Especially, an automatically transmitted request for medical assistance may comprise a position of the car as detected by a satellite navigation module or other position determining means of the car.

According to an implementation, the inductive sensing unit is configured to measure an impedance of each coil of the coil arrangement and to determine the state depending on the impedance.

According to an implementation, the inductive sensing unit is configured to excite each coil of the coil arrangement with a pulsed current and to measure a voltage across the coil arrangement, the inductive sensing unit being preferably further arranged to convert the voltage across the coil into a direct-current voltage and to convert the direct-current voltage into a digital signal for evaluation by a microcontroller.

Such implementations have been proven suitable for the inductive sensing unit in the context of typical applications.

The detection circuit preferably further comprising a reference coil being arranged such that it is electrically connected in parallel with each of the coils of the coil arrangement. This can provide for compensation of long-term current variations and temperature variations.

According to an implementation, the capacitive sensing unit comprises a first operational amplifier, a second operational amplifier, an SR-flipflop and a capacitor, wherein the detection circuit is arranged such that one port of a currently measured coil of the coil arrangement is connected to an output, preferably an inverting output, of the SR-flipflop, and that another port of the coil is connected to an input of the first operational amplifier and to an input of the second operational amplifier, the inputs of the operational amplifiers being preferably negative inputs. An input of the first operational amplifier being not connected to the coil is connected to a first reference voltage source and an input of the second operational amplifier being not connected to the coil is connected to a second reference voltage source. The first reference voltage source delivers a first reference voltage being larger than a second reference voltage being delivered by the second reference voltage source. An inverted output of the first operational amplifier is connected to an S-input of the SR-flipflop and a non-inverted output of the second operational amplifier is connected to an R-input of the SR-flipflop. The port of the coil being connected to the operational amplifiers is further connected to a port of the capacitor, the other port of the capacitor being connected to ground.

During capacitive sensing, a frequency is preferably measured at the output of the SR-flipflop, wherein the hands-off state is detected if the frequency is above a first threshold, and wherein the hands-on state is detected if the frequency is below a second threshold.

Such implementations of the capacitive sensing unit have been proven suitable for typical applications.

Preferably, the detection circuit is configured to sense each coil of the coil arrangement separately. The detection circuit more preferably comprises a switching element for selecting one of the coils of the coil arrangement as the currently measured coil. This can be used in order to distinctly select one of the coils for measurement. As the coils are typically distributed over the wheel, a detection where a driver's hand contacts the steering wheel can be made by successively measuring the coils.

The invention further relates to a detection arrangement for detecting whether a steering wheel is in a hands-on state or a hands-off state. The detection arrangement comprises an inventive detection circuit, wherein all implementations and variations can be used. The detection arrangement further comprises a coil arrangement, the coil arrangement comprising a number of coils to be distributed around the steering wheel. The coil arrangement is connected with the detection circuit.

With the detection arrangement, a system to measure a state of a steering wheel is provided. The coils can preferably be distributed around a steering wheel. The advantages discussed above with respect to the inventive detection circuit equally apply to the inventive detection arrangement.

The coil arrangement preferably comprises eight coils. This has been proven suitable for typical applications. It allows for a suitable resolution of a contact point at which a driver's hand contacts the steering wheel. However, it should be noted that any number of coils can be used, for example one single coil, two coils, or any other number of coils.

Preferably, the coils of the coil arrangement each are electrically connected separately. This allows for a distinct measurement of each coil for detection of a contact point.

Preferably, the coils of the coil arrangement are concatenated directly adjacently and/or seamlessly. This omits the risk that the steering wheel is contacted at a point where the contact cannot be detected by any coil.

The invention further relates to a steering wheel arrangement. The steering wheel arrangement comprises a steering wheel and an inventive detection arrangement. Regarding the detection arrangement, all implementations and variations as discussed can be used. The coils of the detection arrangement are wrapped around the steering wheel.

With the inventive steering wheel arrangement, the advantages discussed above with respect to the inventive detection circuit and the inventive detection arrangement can be applied for a steering wheel.

It should be noted that each functionality being described in this application with respect to devices, for example a detection circuit, may also be claimed in terms of a respective method. Such methods are to be considered as a part of the disclosure of this application.

Further variations and advantages will be apparent from the following description of an embodiment, given with reference to the enclosed drawing, in which
Fig. 1: shows a steering wheel arrangement,
Fig. 2: shows an inductive sensing unit,
Fig. 3: shows a capacitive sensing unit,
Fig. 4: shows a typical voltage oscillation while doing capacitive sensing, and
Figs. 5a, 5b, 5c: show schematic drawings illustrating capacitive sensing.

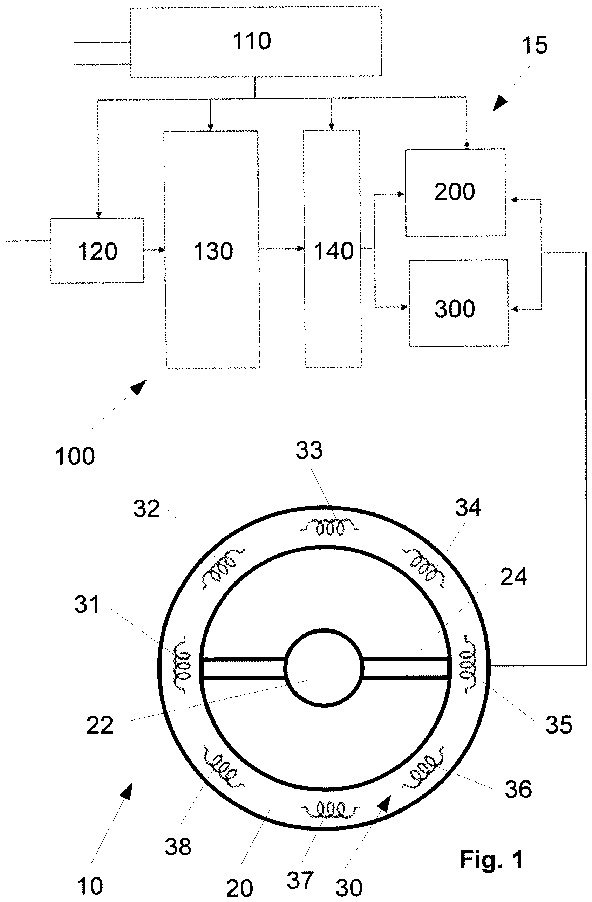

Fig. 1 shows schematically a steering wheel arrangement 10 comprising a steering wheel 20 and a detection arrangement 15, the detection arrangement 15 comprising a detection circuit 100 and a coil arrangement 30. The steering wheel 20 comprises a hub 22 and spokes 24. It can be rotated around the hub 22, for example by a driver.

The coil arrangement 30 comprises eight coils 31, 32, 33, 34, 35, 36, 37, 38 that are positioned inside the steering wheel 20. The coils 31, 32, 33, 34, 35, 36, 37, 38 are arranged such that they are concatenated directly and seamlessly, despite their purely schematic representation in fig. 1. Thus, there is no area along the circumference of the steering wheel 20 where no coil is available. The purpose of the coil arrangement 30 is to provide for detection whether the steering wheel 20 is in a hands-on state or in a hands-off state. The hands-on state is a state in which at least one hand of the driver touches the steering wheel 20. The hands-off state is a state in which no hand touches the steering wheel 20.

The detection circuit 100 comprises a supply unit 110 for power supply of the other components, a CAN transceiver block 120 for providing communication with a CAN bus, a microcontroller 130, a switch block 140, an inductive sensing unit 200 and a capacitive sensing unit 300. The sensing units 200, 300 are both connected with the coil arrangement 30. The inductive sensing unit 200 is configured to perform inductive sensing using the coil arrangement 30. The capacitive sensing unit 300 is configured to perform capacitive sensing using the coil arrangement 30. Inductive sensing consumes more electric power than capacitive sensing. Both types of sensing are performed using the same coil arrangement 30.

The microcontroller 130 is programmed to control operation of the detection circuit 100. It may operate the switch block 140 in order to select if the inductive sensing unit 200 should perform inductive sensing or if the capacitive sensing unit 300 should perform capacitive sensing. After having determined the state of the steering wheel 20, this state can be reported using the CAN transceiver block 120 to other units of a car using a CAN bus system.

With regard to the functionality of the sensing units 200, 300, reference is made to the following description.

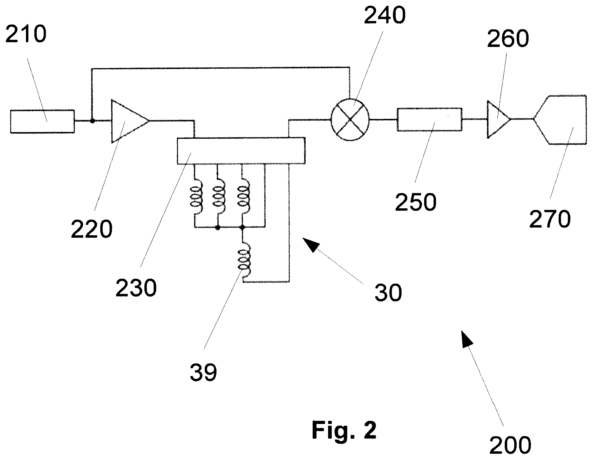

Fig. 2 shows schematically an implementation of the inductive sensing unit 200. The inductive sensing unit 200 comprises a pulse width modulation module 210, a driver 220, a switching unit 230, an adder 240, a filter 250, an amplifier 260 and a 10-bit analog-to-digital converter 270. The switching unit 230 is connected with the coils of the coil arrangement 30 and allows to select one of the coils for measurement. Thus, only one of the coils of the coil arrangement 30 is measured at a specific time. The switching unit 230 may switch the measured coils successively such that each coil is measured periodically. It should be noted that only three of the coils of the coil arrangement 30 are shown in fig. 2 for reasons of simplicity.

Opposite to the switching unit 230, a reference coil 39 is connected to the coil arrangement 30. A port of the reference coil 39 is fed back through the switching unit 230 to the adder 240. The inductive sensing unit 200 is configured to determine the state of the steering wheel 20 based on measuring an impedance of a respectively measured coil. The impedance measurement operates by exciting the coil intermittently by the pulse width modulation module 210. The signal generated by the pulse width modulation module 210 has the form of a pulsed current, is amplified by the driver 220 and fed through the switching unit 230 to the respective coil. The signal is also fed into the adder 240. A voltage across the coil is than measured, wherein the voltage is proportional to the impedance of the coil.

The pulsed voltage is converted into a direct-current signal using the filter 250 and is further conditioned using the amplifier 260. The resulting signal is converted into a digital signal by the analog-to-digital converter 270. The digital signal is then sent to the microcontroller 130 for evaluation, especially for determining the state.

The reference coil 39 provides for a removal of variations in readings due to long term current variations and temperature variations.

It should be noted that the inductive sensing unit 200 is further configured to perform electrocardiography measurements at a hand of the driver. It is especially configured to detect a medical condition based on electrocardiography measurements and, in case of a detected medical condition, to issue a warning message to a driver and to send a request using a wireless communication module in order to get medical assistance. This request will contain positioning data gathered from a satellite navigation module that is not shown in the drawing.

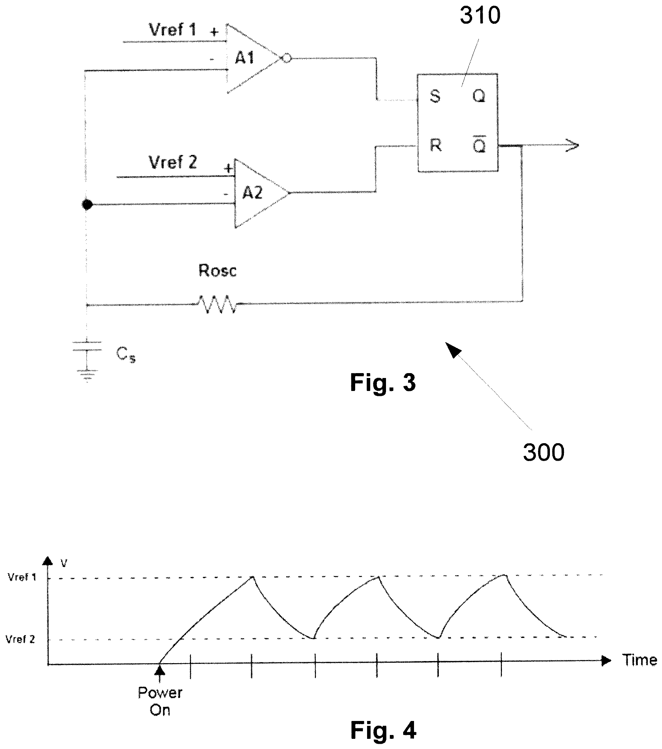

Fig. 3 shows schematically an implementation of the capacitive sensing unit 300. The capacitive sensing unit 300 comprises an SR-flipflop 310. It further comprises a first operational amplifier A1 and a second operational amplifier A2. A positive input of the first operational amplifier A1 is connected to a source of a first reference voltage Vref1. A positive input of the second operational amplifier A2 is connected to a source of a second reference voltage Vref2. Respective negative inputs of the operational amplifiers A1, A2 are connected together and are further connected to a coil to be measured, here denoted as Rosc, and to a port of a grounded capacitor Cₛ. A first input S of the SR-flipflop 310 is connected to an inverting output of the first operational amplifier A1. A second input R of the SR-flipflop 310 is connected to a non-inverting output of the first operational amplifier A2.

The coil is further connected to an inverting output of the SR-flipflop 310. This output also forms an output of the capacitive sensing unit 300, denoted by an arrow in fig. 3. The output is measured by the microcontroller 130 so that a frequency of oscillation can be determined.

A typical oscillation of the signal at the output of the capacitive sensing unit 300 is shown in fig. 4. When power is turned on, the signal rises to the first reference voltage Vref1. Then it drops to the second reference voltage Vref2 and raises again to the first reference voltage Vref1. This oscillation is repeated periodically. When the frequency of this oscillation drops below a certain threshold, this indicates that the currently measured coil has changed its capacitance due to being contacted by a hand.

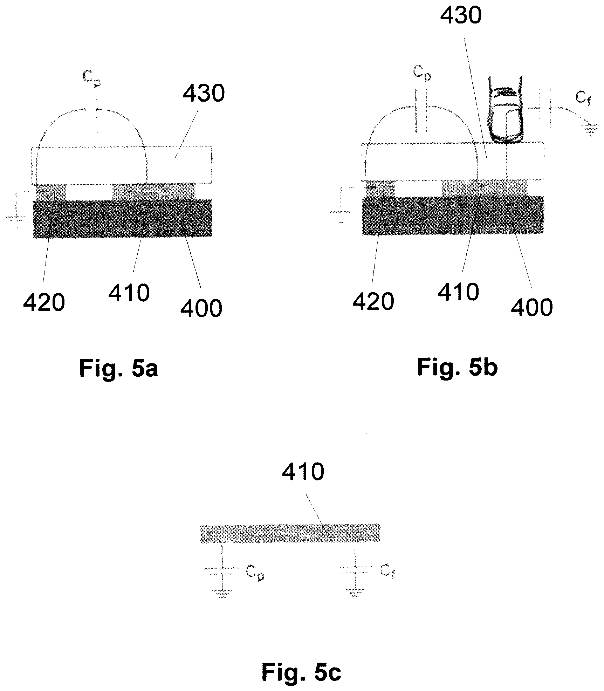

Figs. 5a to 5c show schematic illustrations of a capacitive measurement principle. Fig. 5a shows a state in which an arrangement comprising a first electric conductor 410 positioned between a substrate 400 and a coverage 430 is not contacted by a finger. A capacitance Cp is measured against a grounded second electric conductor 420. Fig. 5b shows a state in which the coverage 430 is contacted by a finger, thus giving rise to an additional capacitance C_{f}. The superposition of capacitances is shown in fig. 5c, namely that the first electric conductor 410 is coupled by both the capacitances Cp and C_{f} to ground, thus giving rise to a resulting summed capacitance. The different capacitances can be measured, for example, by a capacitive sensing unit 300 as explained above with reference to figs. 3 and 4.

The microcontroller 130 is configured to perform detection of the state of the steering wheel 20 only by capacitive sensing as long as a hands-off state is detected. This saves energy consumption compared with inductive sensing. If a hands-on state is detected, the microcontroller 130 terminates capacitive sensing and starts inductive sensing in order to monitor with high reliability that the hands-on state remains valid. If it is detected by inductive sensing that the driver removes his hand from the steering wheel 20, thus entering the hands-off state, inductive sensing is terminated and capacitive sensing is resumed.

## Claims

1. Detection circuit (100) for detecting whether a steering wheel (20) is in a hands-on state or a hands-off state,
- the detection circuit (100) being adapted to be connected to a coil arrangement (30), the coil arrangement (30) comprising a number of coils (31, 32, 33, 34, 35, 36, 37, 38) to be distributed around the steering wheel (20),
- the detection circuit (100) comprising
- an inductive sensing unit (200) adapted to detect the state based on inductive sensing at the coil arrangement (30), and
- a capacitive sensing unit (300) adapted to detect the state based on capacitive sensing at the coil arrangement (30),
- **characterised in that** the detection circuit (100) is adapted to sense the state using the capacitive sensing unit (300) as long as a hands-off state is detected, and
- to sense the state using the inductive sensing unit (200) if a hands-on state is detected,
- wherein the detection circuit (100) is adapted to terminate capacitive sensing if a hands-on state is detected;
and
- wherein the detection circuit (100) is adapted to resume capacitive sensing if a hands-off state is detected.

2. Detection circuit (100) according to claim 1,
- further comprising an electrocardiography unit being configured to measure an electrocardiogram using the coil arrangement (30).

3. Detection circuit (100) according to one of the preceding claims,
- wherein the inductive sensing unit (200) is configured to measure an impedance of each coil (31, 32, 33, 34, 35, 36, 37, 38) of the coil arrangement (30) and to determine the state depending on the impedance.

4. Detection circuit (100) according to one of the preceding claims,
- wherein the inductive sensing unit (200) is configured to excite each coil (31, 32, 33, 34, 35, 36, 37, 38) of the coil arrangement (30) with a pulsed current and to measure a voltage across the coil arrangement (30),
- the inductive sensing unit (200) being preferably further arranged to convert the voltage across the coil (31, 32, 33, 34, 35, 36, 37, 38) into a direct-current voltage and to convert the direct-current voltage into a digital signal for evaluation by a microcontroller (130).

5. Detection circuit (100) according to one of the preceding claims,
- further comprising a reference coil (39) being arranged such that it is electrically connected in parallel with each of the coils (31, 32, 33, 34, 35, 36, 37, 38) of the coil arrangement (30).

6. Detection circuit (100) according to one of the preceding claims,
- wherein the capacitive sensing unit (300) comprises a first operational amplifier (A1), a second operational amplifier (A2), an SR-flipflop (310) and a capacitor (Cₛ),
- wherein the detection circuit (100) is arranged such that one port of a currently measured coil (31, 32, 33, 34, 35, 36, 37, 38) of the coil arrangement (30) is connected to an output, preferably an inverting output, of the SR-flipflop (310), and that another port of the coil (31, 32, 33, 34, 35, 36, 37, 38) is connected to an input of the first operational amplifier (A1) and to an input of the second operational amplifier (A2), the inputs of the operational amplifiers (A1, A2) being preferably negative inputs,
- wherein an input of the first operational amplifier (A1) being not connected to the coil (31, 32, 33, 34, 35, 36, 37, 38) is connected to a first reference voltage source,
- wherein an input of the second operational amplifier (A2) being not connected to the coil (31, 32, 33, 34, 35, 36, 37, 38) is connected to a second reference voltage source,
- wherein the first reference voltage source delivers a first reference voltage (Vref1) being larger than a second reference voltage (Vref2) being delivered by the second reference voltage source,
- wherein an inverted output of the first operational amplifier (A1) is connected to an S-input of the SR-flipflop (310),
- wherein a non-inverted output of the second operational amplifier (A2) is connected to an R-input of the SR-flipflop (310), and
- wherein the port of the coil (31, 32, 33, 34, 35, 36, 37, 38) being connected to the operational amplifiers (A1, A2) is further connected to a port of the capacitor (Cₛ), the other port of the capacitor (Cₛ) being connected to ground.

7. Detection circuit (100) according to claim 6,
- wherein during capacitive sensing a frequency is measured at the output of the SR-flipflop (310),
- wherein the hands-off state is detected if the frequency is above a first threshold, and
- wherein the hands-on state is detected if the frequency is below a second threshold.

8. Detection circuit (100) according to one of the preceding claims,
- wherein the detection circuit (100) is configured to sense each coil (31, 32, 33, 34, 35, 36, 37, 38) of the coil arrangement (30) separately,
- the detection circuit (100) preferably comprising a switching element (230) for selecting one of the coils (31, 32, 33, 34, 35, 36, 37, 38) of the coil arrangement (30) as the currently measured coil (31, 32, 33, 34, 35, 36, 37, 38).

9. Detection arrangement (15) for detecting whether a steering wheel (20) is in a hands-on state or a hands-off state, the detection arrangement (15) comprising:
- a detection circuit (100) according to one of the preceding claims, and
- a coil arrangement (30), the coil arrangement (30) comprising a number of coils (31, 32, 33, 34, 35, 36, 37, 38) to be distributed around the steering wheel (20),
- wherein the coil arrangement (30) is connected with the detection circuit (100).

10. Detection arrangement (15) according to claim 9,
- wherein the coils (31, 32, 33, 34, 35, 36, 37, 38) of the coil arrangement (30) each are electrically connected separately.

11. Detection arrangement (15) according to one of claims 9 or 10,
- wherein the coils (31, 32, 33, 34, 35, 36, 37, 38) of the coil arrangement (30) are concatenated directly adjacently and/or seamlessly.

12. Steering wheel arrangement (10), comprising
- a steering wheel (20), and
- a detection arrangement (15) according to one of claims 9 to 11,
- wherein the coils (31, 32, 33, 34, 35, 36, 37, 38) of the detection arrangement (15) are wrapped around the steering wheel (20).

## Patentansprüche

1. Detektionsschaltung (100) zum Erkennen, ob ein Lenkrad (20) in einem "Hände anliegend"-Status oder einem "Hände nicht anliegend"-Status ist,
- wobei die Detektionsschaltung (100) dafür ausgelegt ist, mit einer Spulenanordnung (30) verbunden zu sein, wobei die Spulenanordnung (30) eine Anzahl von Spulen (31, 32, 33, 34, 35, 36, 37, 38) umfasst, die rund um das Lenkrad (20) verteilt anzuordnen sind,
- wobei die Detektionsschaltung (100), umfasst:
- eine induktive Erfassungseinheit (200), die dafür ausgelegt ist, den Zustand basierend auf induktiver Erfassung an der Spulenanordnung (30) zu erkennen, und
- eine kapazitive Erfassungseinheit (300), die dafür ausgelegt ist, den Zustand basierend auf kapazitiver Erfassung an der Spulenanordnung (30) zu erkennen,
- **dadurch gekennzeichnet, dass**
die Detektionsschaltung (100) dafür ausgelegt ist, den Zustand mittels der kapazitiven Erfassungseinheit (300) zu erfassen, solange ein "Hände nicht anliegend"-Status erkannt wird, und
- den Zustand mittels der induktiven Erfassungseinheit (200) zu erfassen, wenn ein "Hände anliegend"-Status erkannt wird,
- wobei die Detektionsschaltung (100) dafür ausgelegt ist, die kapazitive Erfassung zu beenden, wenn ein "Hände anliegend"-Status erkannt wird;
und
- wobei die Detektionsschaltung (100) dafür ausgelegt ist, die kapazitive Erfassung wieder aufzunehmen, wenn ein "Hände nicht anliegend"-Status erkannt wird.

2. Detektionsschaltung (100) gemäß Anspruch 1,
- ferner umfassend eine Elektrokardiographieeinheit, die dafür ausgelegt ist, mittels der Spulenanordnung (30) ein Elektrokardiogramm zu messen.

3. Detektionsschaltung (100) gemäß einem der vorstehenden Ansprüche,
- wobei die induktive Erfassungseinheit (200) dafür ausgelegt ist, eine Impedanz jeder Spule (31, 32, 33, 34, 35, 36, 37, 38) der Spulenanordnung (30) zu messen und den Zustand in Abhängigkeit von der Impedanz zu bestimmen.

4. Detektionsschaltung (100) gemäß einem der vorstehenden Ansprüche,
- wobei die induktive Erfassungseinheit (200) dafür ausgelegt ist, jede Spule (31, 32, 33, 34, 35, 36, 37, 38) der Spulenanordnung (30) mit einem gepulsten Strom zu erregen und eine Spannung über die Spulenanordnung (30) zu messen,
- wobei die induktive Erfassungseinheit (200) vorzugsweise ferner dafür ausgelegt ist, die Spannung über die Spule (31, 32, 33, 34, 35, 36, 37, 38) in eine Gleichspannung umzuwandeln und die Gleichspannung in ein digitales Signal für die Auswertung durch einen Mikrocontroller (130) umzuwandeln.

5. Detektionsschaltung (100) gemäß einem der vorstehenden Ansprüche,
- ferner umfassend eine Referenzspule (39), die derart ausgelegt ist, dass sie elektrisch mit jeder der Spulen (31, 32, 33, 34, 35, 36, 37, 38) der Spulenanordnung (30) parallel geschaltet ist.

6. Detektionsschaltung (100) gemäß einem der vorstehenden Ansprüche,
- wobei die kapazitive Erfassungseinheit (300) einen ersten Operationsverstärker (A1), einen zweiten Operationsverstärker (A2), ein SR-Flipflop (310) und einen Kondensator (C_{S}) umfasst,
- wobei die Detektionsschaltung (100) derart ausgelegt ist, dass ein Port einer aktuell gemessenen Spule (31, 32, 33, 34, 35, 36, 37, 38) der Spulenanordnung (30) mit einem Ausgang, vorzugsweise einem invertierenden Ausgang, des SR-Flipflops (310) verbunden ist und dass ein anderer Port der Spule (31, 32, 33, 34, 35, 36, 37, 38) mit einem Eingang des ersten Operationsverstärkers (A1) und mit einem Eingang des zweiten Operationsverstärkers (A2) verbunden ist, wobei die Eingänge der Operationsverstärker (A1, A2) vorzugsweise negative Eingänge sind,
- wobei ein Eingang des ersten Operationsverstärkers (A1), der nicht mit der Spule (31, 32, 33, 34, 35, 36, 37, 38) verbunden ist, mit einer ersten Referenzspannungsquelle verbunden ist,
- wobei ein Eingang des zweiten Operationsverstärkers (A2), der nicht mit der Spule (31, 32, 33, 34, 35, 36, 37, 38) verbunden ist, mit einer zweiten Referenzspannungsquelle verbunden ist,
- wobei die erste Referenzspannungsquelle eine erste Referenzspannung (Vref1) liefert, die größer ist als eine zweite Referenzspannung (Vref2), welche von der zweiten Referenzspannungsquelle geliefert wird,
- wobei ein invertierter Ausgang des ersten Operationsverstärkers (A1) mit einem S-Eingang des SR-Flipflops (310) verbunden ist,
- wobei ein nicht invertierter Ausgang des zweiten Operationsverstärkers (A2) mit einem R-Eingang des SR-Flipflops (310) verbunden ist, und
- wobei der Port der Spule (31, 32, 33, 34, 35, 36, 37, 38), der mit den Operationsverstärkern (A1, A2) verbunden ist, ferner mit einem Port des Kondensators (Cₛ) verbunden ist, wobei der andere Port des Kondensators (Cₛ) mit Masse verbunden ist.

7. Detektionsschaltung (100) gemäß Anspruch 6,
- wobei während der kapazitiven Erfassung eine Frequenz am Ausgang des SR-Flipflops (310) gemessen wird,
- wobei der "Hände nicht anliegend"-Status erkannt wird, falls die Frequenz oberhalb eines ersten Schwellwertes liegt, und
- wobei der "Hände anliegend"-Status erkannt wird, falls die Frequenz unterhalb eines zweiten Schwellwertes liegt.

8. Detektionsschaltung (100) gemäß einem der vorstehenden Ansprüche,
- wobei die Detektionsschaltung (100) dafür ausgelegt ist, jede Spule (31, 32, 33, 34, 35, 36, 37, 38) der Spulenanordnung (30) separat zu erfassen,
- wobei die Detektionsschaltung (100) vorzugsweise ein Schaltelement (230) zum Auswählen einer der Spulen (31, 32, 33, 34, 35, 36, 37, 38) der Spulenanordnung (30) als die aktuell gemessene Spule (31, 32, 33, 34, 35, 36, 37, 38) umfasst.

9. Detektionsanordnung (15) zum Erkennen, ob ein Lenkrad (20) in einem "Hände anliegend"-Status oder einem "Hände nicht anliegend"-Status ist, wobei die Detektionsanordnung (15) umfasst:
- eine Detektionsschaltung (100) gemäß einem der vorstehenden Ansprüche, und
- eine Spulenanordnung (30), wobei die Spulenanordnung (30) eine Anzahl von Spulen (31, 32, 33, 34, 35, 36, 37, 38) umfasst, die rund um das Lenkrad (20) verteilt anzuordnen sind,
- wobei die Spulenanordnung (30) mit der Detektionsschaltung (100) verbunden ist.

10. Detektionsanordnung (15) gemäß Anspruch 9,
- wobei die Spulen (31, 32, 33, 34, 35, 36, 37, 38) der Spulenanordnung (30) jeweils getrennt voneinander elektrisch verbunden sind.

11. Detektionsanordnung (15) gemäß einem der Ansprüche 9 oder 10,
- wobei die Spulen (31, 32, 33, 34, 35, 36, 37, 38) der Spulenanordnung (30) direkt nebeneinander und/oder nahtlos verkettet sind.

12. Lenkradanordnung (10), umfassend:
- ein Lenkrad (20) und
- eine Detektionsanordnung (15) gemäß einem der Ansprüche 9 bis 11,
- wobei die Spulen (31, 32, 33, 34, 35, 36, 37, 38) der Detektionsanordnung (15) um das Lenkrad (20) herum gewickelt sind.

## Revendications

1. Circuit (100) de détection pour détecter si un volant (20) de direction se trouve dans un état mains sur volant ou un état mains hors volant,
- le circuit (100) de détection étant prévu pour être relié à un agencement (30) de bobines, l'agencement (30) de bobines comportant une multiplicité de bobines (31, 32, 33, 34, 35, 36, 37, 38) à répartir autour du volant (20) de direction,
- le circuit (100) de détection comportant
- une unité (200) de détection inductive prévue pour détecter l'état sur la base d'une détection inductive au niveau de l'agencement (30) de bobines, et
- une unité (300) de détection capacitive prévue pour détecter l'état sur la base d'une détection capacitive au niveau de l'agencement (30) de bobines,
- **caractérisé en ce que**
le circuit (100) de détection est prévu pour détecter l'état à l'aide de l'unité (300) de détection capacitive tant qu'un état mains hors volant est détecté, et
- pour détecter l'état à l'aide de l'unité (200) de détection inductive si un état mains sur volant est détecté,
- le circuit (100) de détection étant prévu pour mettre fin à la détection capacitive si un état mains sur volant est détecté ; et
- le circuit (100) de détection étant prévu pour reprendre la détection capacitive si un état mains hors volant est détecté.

2. Circuit (100) de détection selon la revendication 1,
- comportant en outre une unité d'électrocardiographie configurée pour mesurer un électrocardiogramme à l'aide de l'agencement (30) de bobines.

3. Circuit (100) de détection selon l'une des revendications précédentes,
- l'unité (200) de détection inductive étant configurée pour mesurer une impédance de chaque bobine (31, 32, 33, 34, 35, 36, 37, 38) de l'agencement (30) de bobines et pour déterminer l'état en fonction de l'impédance.

4. Circuit (100) de détection selon l'une des revendications précédentes,
- l'unité (200) de détection inductive étant configurée pour exciter chaque bobine (31, 32, 33, 34, 35, 36, 37, 38) de l'agencement (30) de bobines avec un courant pulsé et pour mesurer une tension aux bornes de l'agencement (30) de bobines,
- l'unité (200) de détection inductive étant de préférence agencée en outre pour convertir la tension aux bornes de la bobine (31, 32, 33, 34, 35, 36, 37, 38) en une tension continue et pour convertir la tension continue en un signal numérique pour évaluation par un microcontrôleur (130).

5. Circuit (100) de détection selon l'une des revendications précédentes,
- comportant en outre une bobine (39) de référence agencée de façon à être raccordée électriquement en parallèle avec chacune des bobines (31, 32, 33, 34, 35, 36, 37, 38) de l'agencement (30) de bobines.

6. Circuit (100) de détection selon l'une des revendications précédentes,
- l'unité (300) de détection capacitive comportant un premier amplificateur opérationnel (A1), un deuxième amplificateur opérationnel (A2), une bascule SR (310) et un condensateur (Cₛ),
- le circuit (100) de détection étant agencé de telle façon qu'une prise d'une bobine (31, 32, 33, 34, 35, 36, 37, 38) en cours de mesure de l'agencement (30) de bobines soit reliée à une sortie, de préférence une sortie inverseuse, de la bascule SR (310), et qu'une autre prise de la bobine (31, 32, 33, 34, 35, 36, 37, 38) soit reliée à une entrée du premier amplificateur opérationnel (A1) et à une entrée du deuxième amplificateur opérationnel (A2), les entrées des amplificateurs opérationnels (A1, A2) étant de préférence des entrées négatives,
- une entrée du premier amplificateur opérationnel (A1) qui n'est pas reliée à la bobine (31, 32, 33, 34, 35, 36, 37, 38) étant reliée à une première source de tension de référence,
- une entrée du deuxième amplificateur opérationnel (A2) qui n'est pas reliée à la bobine (31, 32, 33, 34, 35, 36, 37, 38) étant reliée à une deuxième source de tension de référence,
- la première source de tension de référence délivrant une première tension de référence (Vref1) qui est supérieure à une deuxième tension de référence (Vref2) délivrée par la deuxième source de tension de référence,
- une sortie inversée du premier amplificateur opérationnel (A1) étant reliée à une entrée S de la bascule SR (310),
- une sortie non inversée du deuxième amplificateur opérationnel (A2) étant reliée à une entrée R de la bascule SR (310), et
- la prise de la bobine (31, 32, 33, 34, 35, 36, 37, 38) qui est reliée aux amplificateurs opérationnels (A1, A2) étant en outre reliée à une prise du condensateur (Cs), l'autre prise du condensateur (Cs) étant reliée à la terre.

7. Circuit (100) de détection selon la revendication 6,
- une fréquence étant mesurée à la sortie de la bascule SR (310) pendant la détection capacitive,
- l'état mains hors volant étant détecté si la fréquence est supérieure à un premier seuil, et
- l'état mains sur volant étant détecté si la fréquence est inférieure à un deuxième seuil.

8. Circuit (100) de détection selon l'une des revendications précédentes,
- le circuit (100) de détection étant configuré pour détecter chaque bobine (31, 32, 33, 34, 35, 36, 37, 38) de l'agencement (30) de bobines séparément,
- le circuit (100) de détection de préférence comportant un élément (230) de commutation servant à sélectionner une des bobines (31, 32, 33, 34, 35, 36, 37, 38) de l'agencement (30) de bobines en tant que bobine (31, 32, 33, 34, 35, 36, 37, 38) en cours de mesure.

9. Agencement (15) de détection pour détecter si un volant (20) de direction est dans un état mains sur volant ou un état mains hors volant, l'agencement (15) de détection comportant :
- un circuit (100) de détection selon l'une des revendications précédentes, et
- un agencement (30) de bobines, l'agencement (30) de bobines comportant une multiplicité de bobines (31, 32, 33, 34, 35, 36, 37, 38) à répartir autour du volant (20) de direction,
- l'agencement (30) de bobines étant relié au circuit (100) de détection.

10. Agencement (15) de détection selon la revendication 9,
- chacune des bobines (31, 32, 33, 34, 35, 36, 37, 38) de l'agencement (30) de bobines étant raccordée électriquement séparément.

11. Agencement (15) de détection selon l'une des revendications 9 et 10,
- les bobines (31, 32, 33, 34, 35, 36, 37, 38) de l'agencement (30) de bobines étant directement concaténées de façon adjacente et/ou sans discontinuité.

12. Agencement (10) de volant de direction, comportant
- un volant (20) de direction, et
- un agencement (15) de détection selon l'une des revendications 9 à 11,
- les bobines (31, 32, 33, 34, 35, 36, 37, 38) de l'agencement (15) de détection étant enroulées autour du volant (20) de direction.
